# DEMANDE DE BREVET EUROPEEN

(11) **EP 1 498 200 A1**
(43) Date de publication de la demande: **19.01.2005**
(21) Numéro de dépôt: 03405544.2
(22) Date de dépôt: 16.07.2003
(51) Int. Cl.: B23B 27/16

(54) **Outil de coupe**

(71) Demandeur: Applitec Moutier S.A., 2740 Moutier (CH)
(72) Inventeur: Champion, Francois, 2740 Moutier (CH); Schaller, Vincent, 2742 Perrefitte (CH)
(74) Mandataire: Gresset, Jean

(57) **Abrégé**

Outil de coupe à plaquette rapportée, du type comportant :
- un porte-plaquette (10) comprenant une assise (14) munie de sillons (20) parallèles qui définissent un axe longitudinal X-X, et percée d'un trou (18)
- une plaquette d'usinage (22) qui comprend une portion centrale (24) et deux ailes (26a, 26b) disposées de part et d'autre de la portion centrale (24) et chacune destinée à assurer une fonction d'usinage.

La portion centrale (24) de la plaquette est renforcée et le porte plaquette (10) comporte une creusure (16) formant logement à la portion centrale (24).

## Description

La présente invention se rapporte au domaine de l'usinage. Elle concerne plus particulièrement un outil de coupe à plaquette rapportée, du type comportant un porte-plaquette, une plaquette d'usinage en céramique, par exemple en carbure de tungstène, et des moyens de fixation de la plaquette sur le porte-outil.

Les céramiques utilisées pour réaliser la plaquette conservent leurs caractéristiques physiques même à très haute température, ce qui permet ainsi de travailler à des vitesses de coupe élevées. Malheureusement, ces matériaux sont fragiles et coûteux. C'est pourquoi, le porte-plaquette est fabriqué dans un autre type de matériau, par exemple de l'acier trempé, qui est plus élastique, facilement usinable et de moindre coût.

Comme présenté dans le document PCT/CH 00/00335 au nom de la demanderesse, le porte-plaquette comporte, généralement, un logement destiné à recevoir la plaquette, dont une paroi forme une assise munie de sillons parallèles, qui définissent un axe longitudinal X-X.

La plaquette est constituée d'une portion centrale et de deux ailes disposées de part et d'autre de la portion centrale et destinées à assurer une fonction d'usinage. La portion centrale comprend des faces planes respectivement d'appui et supérieure qui sont parallèles entre elles, la distance qui les sépare définissant l'épaisseur de la plaquette. La face d'appui est munie de gorges destinées à coopérer avec les sillons de l'assise pour assurer le positionnement relatif de la plaquette et du porte-plaquette

La portion centrale est munie d'un ou de deux trous la traversant de part en part, d'axes perpendiculaires à l'axe longitudinal X-X et aux faces d'appui et supérieure.

Les moyens de fixation sont constitués d'une vis engagée dans chacun des trous de la plaquette et coopérant avec un taraudage que comporte le porte-plaquette, pour les rendre solidaires.

Les plaquettes sont réalisées par frittage. Pour obtenir une précision suffisante, il peut être nécessaire de les rectifier afin que les sillons soient parfaitement en regard des gorges.

Cette opération étant coûteuse, la demanderesse a développé une structure de plaquette particulière, décrite dans le document EP 01810254.1, dans laquelle sa base présente une concavité longitudinale. Ceci permet d'assurer un contact des saillies sur les extrémités des creusures, de sorte que le positionnement soit garanti et reproductible. A cause de la concavité longitudinale, la partie centrale de la plaquette est affaiblie, de telle sorte que si elle était fixée avec une seule vis, elle risquerait de se casser. C'est pourquoi, le serrage se fait au moyen de deux vis disposées au voisinage des points d'appui. Cela implique que le volume de la plaquette est relativement important, ce qui augmente son prix.

Le but de la présente invention est de réduire le prix de la plaquette sans affecter sa solidité ni sa précision.

De façon plus précise, l'outil de coupe selon l'invention comporte :
- un porte-plaquette comprenant une assise munie de sillons parallèles qui définissent un axe longitudinal X-X,
- une plaquette d'usinage qui comprend une portion centrale et deux ailes disposées de part et d'autre de la portion centrale et chacune destinée à assurer une fonction d'usinage, ladite portion centrale comprenant :
   - une face d'appui munie d'une surface plane et une face supérieure plane, parallèle à ladite surface, la distance entre ladite surface et la face supérieure définissant l'épaisseur maximale de la plaquette,
   - un trou la traversant de part en part, d'axe perpendiculaire à l'axe longitudinal et auxdites faces,
   - des gorges pratiquées dans la face d'appui, agencées de manière à recevoir lesdits sillons pour assurer le positionnement de la plaquette sur le porte-plaquette, et
- une vis de fixation de la plaquette engagée dans ledit trou et en appui contre la face supérieure.
Cet outil est caractérisé en ce que :
- les trous sont disposés en regard l'un de l'autre et la vis est unique,
- la portion centrale comprend, du côté de la face d'appui, une section médiane plane, inscrite dans la surface dans laquelle débouche le trou, et deux sections latérales, prolongeant la section médiane et dans lesquelles sont pratiquées les gorges, et
- ladite assise est munie d'une creusure dans sa partie disposée en regard de la section médiane.

De la sorte, l'épaisseur de la plaquette est la plus forte dans sa section médiane, où s'effectue le serrage. A cause de la creusure que comporte le porte-plaquette, la plaquette prend néanmoins appui, par les parois de ses gorges, contre les parois des sillons du porte-plaquette, c'est-à-dire de part et d'autre de la portion centrale, garantissant ainsi un positionnement précis.

Dans le but d'assurer un positionnement optimal, tout en garantissant au mieux la rigidification, la section médiane comporte un anneau central entourant le trou destiné à recevoir la vis, et deux côtés latéraux dont la dimension selon l'axe longitudinal est inférieure au diamètre de la portion centrale. De la sorte, les gorges et les sillons latéraux sont plus longs que les sillons centraux, ce qui donne une bonne assise à la plaquette.

Pour garantir de bonnes conditions de contact entre les parois des sillons et des gorges, celles-ci forment, avec la face d'appui, des angles d'environ 45°.

De manière avantageuse, la plaquette comporte un nombre impair de gorges, la gorge médiane étant alignée sur l'axe longitudinal. Le flanc de la gorge attenant à l'anneau central présente, dans sa partie reliée au fond de la gorge, une inclinaison de 20° environ par rapport à un axe parallèle à celui du trou et, dans sa partie reliée à l'anneau, un arrondi, alors que le flanc de la creusure du porte-plaquette présente également un angle de 20° environ.

D'autres avantages et caractéristiques de l'invention ressortiront de la description qui va suivre, faite en regard du dessin annexé, dans lequel :
- la figure 1 représente, vus en perspective, un porte-plaquette et une plaquette équipant un outil selon l'invention ;
- les figures 2 et 3 sont des vues longitudinales de l'outil selon l'invention, respectivement en coupe et de dessus ; et
- la figure 4 montre, selon une vue de face, l'outil assemblé.

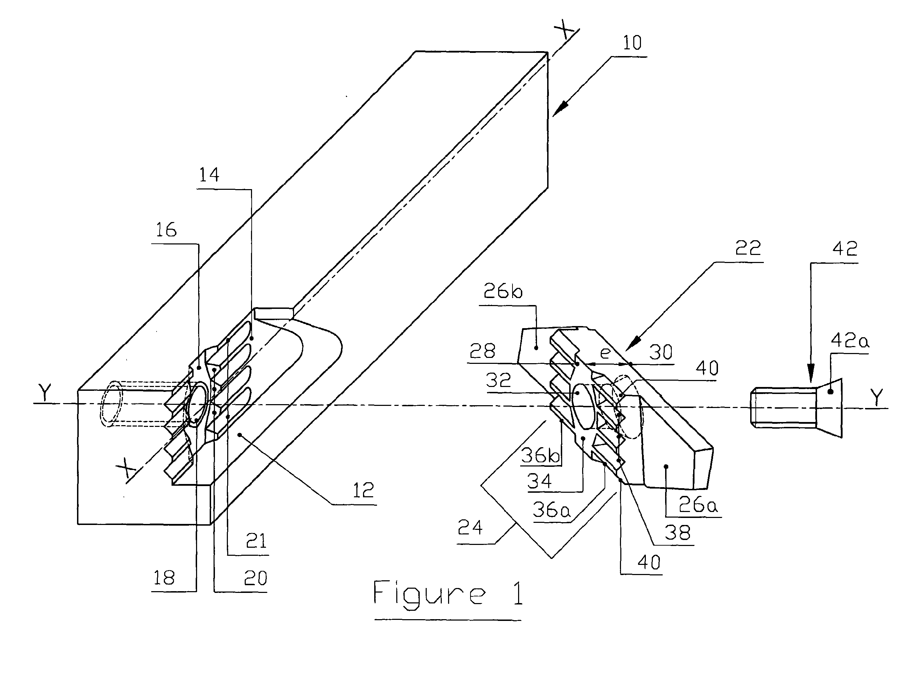

La figure 1 représente un porte-plaquette 10, formé d'une barre en acier trempé, de forme générale parallélépipédique allongée, dont le plus grand côté est parallèle à un axe X-X longitudinal. Ce porte-pièce 10 est muni, à l'un de ses coins, d'un logement 12 destiné à recevoir une plaquette qui sera décrite ci-après.

Le logement 12 comprend des parois longitudinales dont l'une, portant la référence 14, assure une fonction d'assise. Cette dernière comporte, dans sa partie médiane, considérée selon l'axe longitudinal X-X, une creusure 16 et un trou taraudé 18 d'axe Y-Y perpendiculaire à l'axe X-X.

De part et d'autre de la creusure 16, l'assise 14 présente trois sillons 20 parallèles entre eux, répartis régulièrement sur la largeur et orientés selon l'axe X-X, le sillon du milieu passant par le centre du trou 18, et un rebord 21 correspondant sensiblement à un demi-sillon.

Une plaquette 22, représentée en regard du porte-plaquette, comprend une portion centrale 24 et deux ailes 26a et 26b disposées de part et d'autre de la portion centrale 24. Chacune des ailes 26 est munie, à son extrémité libre, d'une arête de coupe permettant d'assurer la fonction d'usinage.

La portion centrale 24 comporte une face d'appui 28 et une face supérieure 30 parallèle à la face d'appui. Ces faces sont séparées l'une de l'autre d'une distance définissant l'épaisseur e maximale de la plaquette 22.

Un trou cylindrique 32, destiné à recevoir une vis de serrage, traverse la plaquette 22 de part en part, de la face supérieure 30 à la face d'appui 28.

La portion centrale 24 comprend, du côté de sa face d'appui, une section médiane plane 34 dans laquelle débouche le trou 32, et deux sections latérales 36a et 36b prolongeant la section médiane 34 dans le sens longitudinal.

La partie de la section médiane 34 entourant le trou 32 est de forme générale annulaire, alors que les côtés sont de forme générale rectangulaire, de dimension, selon l'axe X-X, sensiblement égale aux deux-tiers du diamètre extérieur de la partie annulaire.

Trois gorges 38 sont pratiquées dans les sections latérales 36, chacune destinée à recevoir un des sillons 20. Des biseaux 40 sont disposés de part et d'autre des gorges 38 et sont destinés à coopérer avec les rebords 21.

Les parois latérales des gorges 38 sont reliées entre elles par des surfaces planes se trouvant au même niveau que la surface de la section médiane 34, formant ainsi des dents s'étendant longitudinalement de part et d'autre de la section médiane 34.

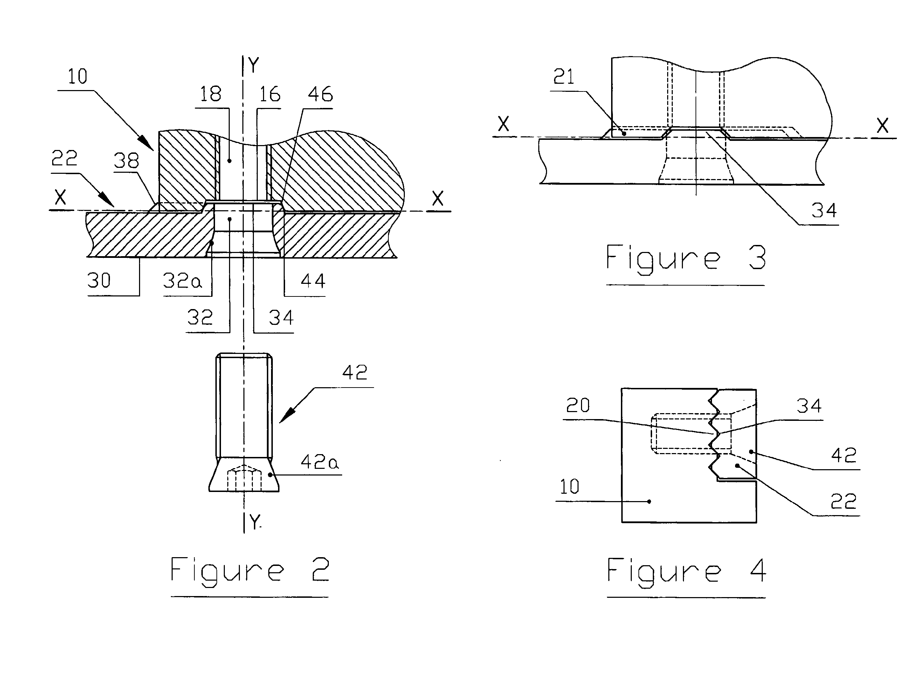

Si l'on se réfère à la figure 2, qui est une vue en coupe passant par les axes X-X et Y-Y, on peut voir que le trou 32 présente, du côté de la face 30, une noyure conique 32a. Une vis 42 est engagée dans le trou 32, serrée dans le trou taraudé 18, sa tête conique 42a se trouvant en appui contre la noyure 32a, pour exercer sur la plaquette 22 une force garantissant sa fixation sur le porte-plaquette 10.

La creusure 16 est suffisamment profonde pour que la section médiane 34 qui se trouve en regard n'entre pas en contact avec le porte-plaquette 10.

Les gorges 38, spécialement celle alignée sur l'axe X-X et visible à la figure 2, sont reliées à la section médiane 34 par un plan incliné 44 faisant un angle d'environ 20° avec cet axe. La partie supérieure de la paroi qui délimite la fin de la gorge du côté de la section médiane 34 est arrondie sur un tiers environ de la hauteur.

Par ailleurs, le flanc 46 reliant le sillon 20 aligné sur l'axe X-X au fond de la creusure 16 est également incliné d'environ 20° par rapport à cet axe.

La figure 3 est une vue de côté de l'outil assemblé. Elle permet de voir que les flancs de l'extrémité des rebords 21 et ceux de la partie rectangulaire de la section médiane 34 font un angle de 45° avec l'axe X-X. Une telle inclinaison permet d'assurer la meilleure étanchéité possible, entre le porte-plaquette 10 et la plaquette 22, permettant d'éviter que des copeaux ne pénètrent dans l'espace compris entre le fond de la creusure 16 et la section médiane 34.

Comme on peut le voir sur la figure 4, qui est une vue frontale de l'outil, les gorges et les sillons sont dimensionnés de manière à ce que leurs flancs seulement coopèrent les uns avec les autres. Ces flancs présentent une inclinaison de 45° par rapport à la surface plane de la section médiane.

De la sorte, lors de la fixation de la plaquette 22 sur le porte-plaquette 10, le serrage de la vis 42 exerce une force axiale appliquant la plaquette sur le porte-plaquette 10, les flancs latéraux des gorges et des sillons coopérant les uns avec les autres pour garantir un positionnement latéral. La plaquette peut être dimensionnée de manière à ce que l'axe du trou 32 soit légèrement décalé par rapport à l'axe de la vis 42, de manière à engendrer une force longitudinale améliorant la qualité du positionnement de la plaquette 22 sur le porte-plaquette 10.

A cause de la grande épaisseur de la section médiane, la plaquette est renforcée dans sa partie susceptible de se casser lors du serrage ou en cours d'usinage. Elle présente ainsi une bonne rigidité. Les moyens de positionnement garantissent, en outre, un bon calage de la plaquette sur le porte-plaquette, de telle sorte que la portion médiane peut être très courte, soit environ 1,5 fois la largeur de la plaquette. De la sorte, le volume de la plaquette peut être considérablement réduit par rapport aux plaquettes connues assurant les mêmes conditions de positionnement et la même rigidité.

## Revendications

1. Outil de coupe à plaquette rapportée, du type comportant :
- un porte-plaquette (10) comprenant une assise (14) munie de sillons (20) parallèles qui définissent un axe longitudinal X-X, et percée d'un trou (18),
- une plaquette d'usinage (22) qui comprend une portion centrale (24) et deux ailes (26a, 26b) disposées de part et d'autre de la portion centrale (24) et chacune destinée à assurer une fonction d'usinage, ladite portion centrale (24) comprenant :
- une face d'appui (28), munie d'une surface plane et une face supérieure plane (30), parallèle à ladite surface, la distance entre ladite surface et la face supérieure définissant l'épaisseur maximale (e) de la plaquette,
- un trou (32) la traversant de part en part, d'axe Y-Y perpendiculaire à l'axe longitudinal X-X et auxdites faces (28, 30),
- des gorges (38) pratiquées dans la face d'appui (28), agencées de manière à recevoir lesdits sillons (20) pour assurer le positionnement de la plaquette (22) sur le porte-plaquette (10), et
- une vis de fixation (42) de la plaquette engagée dans lesdits trous (18, 32),
**caractérisé en ce que :**
- les trous (18, 32) sont disposés en regard l'un de l'autre et la vis (42) est unique,
- la portion centrale (24) comprend, du côté de la face d'appui (28), une section médiane (34) plane, inscrite dans la surface dans laquelle débouche le trou (32), et deux sections latérales (36a, 36b), prolongeant la section médiane (34) et dans lesquelles sont pratiquées les gorges (38), et
- ladite assise (14) est munie d'une creusure (16) dans sa partie disposée en regard de la section médiane (34).

2. Outil selon la revendication 1, **caractérisé en ce que** la section médiane (34) comporte un anneau central entourant le trou (32) destiné à recevoir la vis (42), et deux côtés latéraux dont la dimension selon l'axe longitudinal X-X est inférieure au diamètre de la portion centrale.

3. Outil selon l'une des revendications 1 et 2, **caractérisé en ce que** les parois des sillons (20) et des gorges (38) forment, avec la face d'appui (28), des angles d'environ 45°.

4. Outil selon l'une des revendications 1 à 3, **caractérisé en ce que** la plaquette (22) comporte un nombre impair de gorges (38), la gorge médiane étant alignée sur l'axe longitudinal X-X, et **en ce qu'**elle comporte un flanc, attenant à l'anneau central, qui présente, dans sa partie reliée au fond de la gorge, une inclinaison de 20° environ par rapport à un axe parallèle à celui Y-Y du trou (32) et, dans sa partie reliée à l'anneau, un arrondi, alors que le porte-plaquette (10) comporte un flanc reliant le sillon (20) aligné sur l'axe longitudinal X-X au fond la creusure présente également un angle de 20° environ par rapport à un axe parallèle à celui Y-Y du trou (18).
